# EUROPÄISCHE PATENTSCHRIFT

(11) **EP 3 052 820 B1**
(45) Veröffentlichungstag und Bekanntmachung des Hinweises auf die Patenterteilung: **09.08.2017**
(21) Anmeldenummer: 14777581.1
(22) Anmeldetag: 29.09.2014
(51) Int. Cl.: F16B 19/10, F16B 13/12

(54) **VERANKERUNGSVORRICHTUNG**
ANCHORING DEVICE
DISPOSITIF D'ANCRAGE

(30) Priorität: 30.09.2013 DE 102013219797
(43) Veröffentlichungstag der Anmeldung: 10.08.2016
(73) Patentinhaber: A. RAYMOND et Cie, 38000 Grenoble (FR)
(72) Erfinder: RHEIN, Axel, 79585 Steinen (DE)
(74) Vertreter: Tilmann, Max Wilhelm
(86) Internationale Anmeldenummer: PCT/EP2014/070784
(87) Internationale Veröffentlichungsnummer: WO 2015/044417

(56) Entgegenhaltungen:
- GB-A- 2 443 197
- US-A1- 2009 220 299

## Beschreibung

Die Erfindung betrifft eine Verankerungsvorrichtung gemäß dem Oberbegriff des Patentanspruches 1.

Eine derartige Verankerungsvorrichtung ist aus US-A-3,768,845 bekannt. Die vorbekannte Verankerungsvorrichtung weist eine Einsatzhülse auf, die über Krallzungen verfügt, die mit einer Innenwand einer in einem Trägerteil ausgebildeten Einsatzausnehmung in Eingriff bringbar sind, und die mit Rückhaltemitteln ausgestattet ist. Weiterhin weist die vorbekannte Verankerungsvorrichtung ein Einfügeteil auf, das in einer Einschieberichtung in die Einsatzhülse einschiebbar und durch die Rückhaltemittel gegen ein Verschieben entgegen der Einschieberichtung blockiert ist. Bei Einschieben des Einfügeteiles in die Einsatzhülse kommen die Krallzungen durch eine Bewegung nach radial außen mit der Innenwand der Einsatzausnehmung in Eingriff, so dass nunmehr die Einsatzhülse in der Einsatzausnehmung verankert ist. Das Einfügeteil ist als ein zylinderförmiger Stift ausgebildet, der sich nach Einschieben in die Einsatzhülse im Rahmen üblicher Handhabungskräfte unlösbar mit in Einschieberichtung radial nach innen weisenden Rückhaltezungen als Rückhaltemittel verkrallt.

Aus GB 2 443 197 A ist eine Verankerungsvorrichtung mit einer Einsatzhülse bekannt. Die dort beschriebene Einsatzhülse ist an ihrem Außenumfang mit einer umlaufenden Kerbverzahnung versehen, die mit einer Innenwand einer in einem Trägerteil ausgebildeten Einsatzausnehmung in Eingriff bringbar ist. Ferner weist die dort beschriebene Verankerungsvorrichtung Rückhaltemittel in Form eines auf der Innenseite der Einsatzhülse umlaufenden Absatzes auf. Neben der so ausgeformten Einsatzhülse weist die bekannte Verankerungsvorrichtung zudem ein Einfügeteil auf, das in einer Einschieberichtung in die Einsatzhülse einschiebbar ist und durch die Rückhaltemittel gegen ein Verschieben in der Einschieberichtung blockiert ist. Bei der Bauform der GB 2 443 197 A weist das Einfügeteil einen Kanal auf, in den ein Stift eingeführt werden kann. Der Stift weist endseits eine Verbreiterung auf, deren Außendurchmesser dem Innendurchmesser des Kanals entspricht. Durch das Anpassen des Außendurchmessers der Verbreiterung des Stifts an den Innendurchmesser des Kanals wird verhindert, dass Arme, die an dem Einfügeteil vorgesehen sind und deren Vorsprünge mit den Rückhaltemitteln zusammenwirken sollen, nach innen schwenken können und dadurch die Blockade des Einfügeteils in der Einsatzhülse aufgehoben werden könnte. Eine vergleichbare Verankerungsvorrichtung ist aus US 2009/0220299 A1 bekannt. Auch hier weist ein in einen Kanal des Einfügeteils einschiebbarer Stift einen Außendurchmesser auf, der an einen nach innen vorspringenden Wulst am unteren Ende der elastisch nach außen federnden Arme des Einfügeteils angepasst ist, um deren radiale Position festzulegen.

Der Erfindung liegt die Aufgabe zugrunde, eine Verankerungsvorrichtung der eingangs genannten Art anzugeben, die sich bei einer sehr stabilen Verankerung der Einsatzhülse durch eine einfache Demontierbarkeit auszeichnet.

Diese Aufgabe wird bei einer Verankerungsvorrichtung der eingangs genannten Art erfindungsgemäß mit den kennzeichnenden Merkmalen des Patentanspruches 1 gelöst.

Dadurch, dass bei der erfindungsgemäßen Verankerungsvorrichtung das Einfügeteil einen Nietkörper mit wenigstens einem Spreizarm aufweist, der beziehungsweise die mit wenigstens einer Rückhaltekante zusammenwirkt beziehungsweise zusammenwirken, lässt sich das Einfügeteil über die Bewegung des oder jedes Rückhaltearmes lösbar und demontierbar mit der Einsatzhülse verbinden, so dass die Verankerungsvorrichtung bei Bedarf wieder aus der Einsatzausnehmung entfernbar ist.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles mit Bezug auf die Figuren der Zeichnung.

Es zeigen:
- Fig. 1: in einer perspektivischen Ansicht ein Ausführungsbeispiel einer erfindungsgemäßen Verankerungsvorrichtung mit einer Einsatzhülse und mit einem Spreizniet als Einfügeteil,
- Fig. 2: in einer perspektivischen Ansicht die Einsatzhülse des Ausführungsbeispiels gemäß Fig. 1,
- Fig. 3: in einer perspektivischen Ansicht den Spreizniet des Ausführungsbeispiels gemäß Fig. 1,
- Fig. 4: in einer geschnittenen perspektivischen Ansicht ein mit einer Einsatzausnehmung ausgebildetes Trägerteil mit einer in die Einsatzausnehmung eingefügten Einsatzhülse gemäß dem Ausführungsbeispiel von Fig. 1,
- Fig. 5: in einer Draufsicht die Anordnung gemäß Fig. 4,
- Fig. 6: in einer geschnittenen perspektivischen Ansicht das Trägerteil gemäß Fig. 4 mit der in der Einsatzausnehmung angeordneten Einsatzhülse sowie ein auf das Trägerteil aufgelegten Anbauteil mit einem in die Einsatzhülse eingeschobenen Spreizniet in einer Vormontageanordnung und
- Fig. 7: in einer perspektivischen Ansicht die Anordnung gemäß Fig. 6 mit dem Spreizniet in einer Endmontageanordnung.

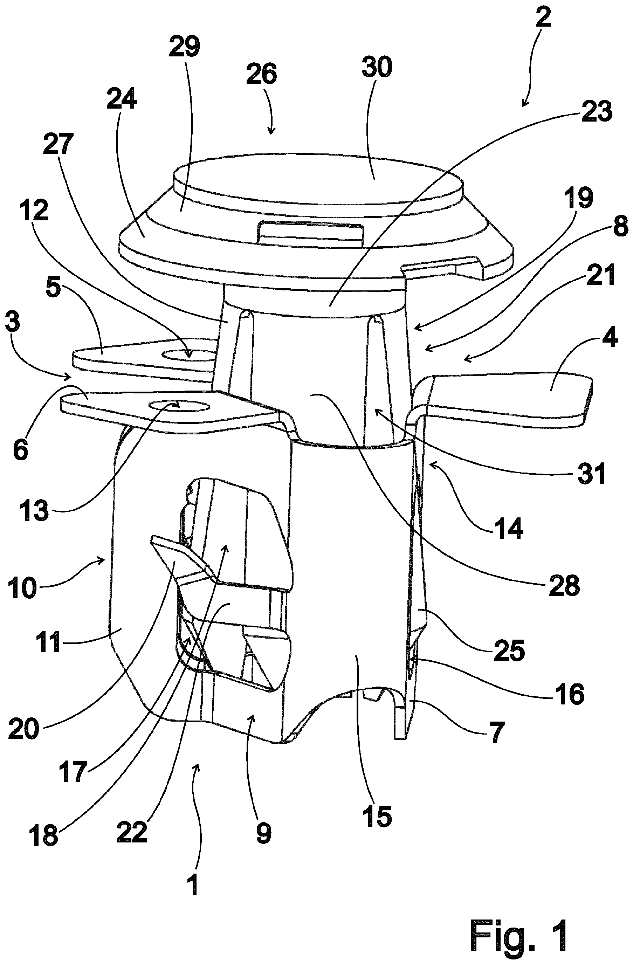

Fig. 1 zeigt in einer perspektivischen Ansicht ein Ausführungsbeispiel einer erfindungsgemäßen Verankerungsvorrichtung, das über eine als Stanz-Biege-Teil aus einem Metallblech hergestellte Einsatzhülse 1 und als Einfügeteil über einen aus einem hartelastischen Kunststoffmaterial hergestellten Spreizniet 2 verfügt.

Die Einsatzhülse 1 weist bis auf eine Umfangslücke 3 eine geschlossene ringartige Gestalt auf und erstreckt sich in einer axialen Richtung. An einem kopfseitigen axialen Ende ist die Einsatzhülse 1 mit radial nach außen überstehenden Auflagezungen 4, 5, 6 ausgebildet, die an flach ausgebildeten Flachabschnitten 7, 8, 9 von einer im Wesentlichen planen Gestalt angeformt sind. Die an die Umfangslücke 3 angrenzenden randseitigen Flachabschnitte 8, 9 weisen an die Umfangslücke 3 angrenzende Ausstellabschnitte 10, 11 auf, die gegenüber den randseitigen Flachabschnitten 8, 9 nach radial außen abgewinkelt ausgerichtet sind. Die an den randseitigen Flachabschnitten 8, 9 angeformten Auflagezungen 5, 6 sind jeweils mit einer Demontageausnehmung 12, 13 ausgebildet. Die randseitigen Flachabschnitte 8, 9 sind über nach radial außen gewölbte Verbindungsabschnitte 14, 15 mit dem der Umfangslücke 3 gegenüber liegenden mittigen Flachabschnitt 7 verbunden.

In den Flachabschnitten 7, 8, 9 ist jeweils eine Armfreimachung 16, 17, 18 ausgebildet, so dass die Einsatzhülse 1 kopfseitige und fußseitige offene Ringstrukturen aufweist. An den randseitigen Flachabschnitten 8, 9 ist jeweils eine Krallzunge 19, 20 ausgebildet, die über einen sich in Umfangsrichtung erstreckenden, die jeweilige Krallzunge 19, 20 relativ elastisch anbindenden Verbindungssteg 21, 22 mit dem benachbarten Verbindungsabschnitt 14, 15 verbunden ist. Die Krallzungen 19, 20 sind abgewinkelt in Richtung der an dem entsprechenden randseitigen Flachabschnitt 8, 9 angeformten Auflagezungen 5, 6 weisend nach radial außen ausgestellt und vorzugsweise spitz ausgebildet.

Der Spreizniet 2 des Ausführungsbeispiels gemäß Fig. 1 verfügt über einen Nietkörper 23, der an einem Kopfende einen nach radial außen auskragenden Kopfteller 24 trägt. An dem Kopfteller 24 sind bei dem Ausführungsbeispiel gemäß Fig. 1 vier Spreizarme 25, 26, 27, 28 angeformt, die sich in axialer Richtung von dem Kopfteller 24 weg erstrecken.

Bei nicht dargestellten Abwandlungen weist der Nietkörper 23 zwei oder drei Spreizarme auf.

Weiterhin ist der Spreizniet 2 gemäß Fig. 1 mit einem Nietstift 29 ausgestattet, der über einen Deckteller 30 und über einen an den Deckteller 30 angeformten, sich in axialer Richtung erstreckenden Spreizschaft 31 verfügt.

In der Anordnung gemäß Fig. 1 ist der Nietstift 29 vollständig in den Nietkörper 23 eingeschoben, so dass durch die Einwirkung des Spreizschafts 31 auf die Spreizarme 25, 26, 27, 28 diese nach radial außen ausgestellt und bei der in Fig. 1 in die Einsatzhülse 1 eingeschobenen Anordnung des Spreizniets 2 in die Armfreimachungen 16, 17, 18 beziehungsweise in die Umfangslücke 3 eingetreten sind.

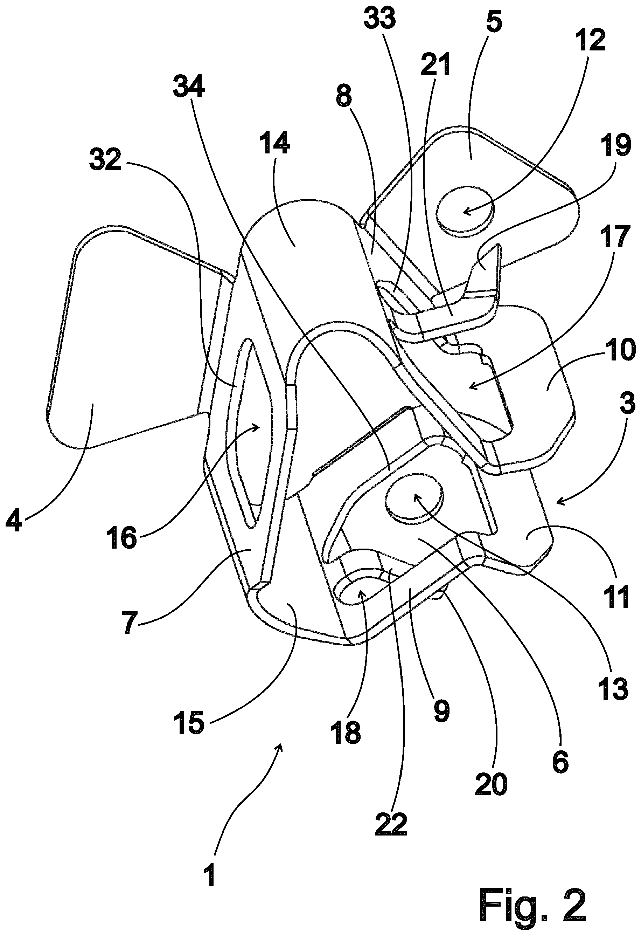

Fig. 2 zeigt in einer perspektivischen Ansicht die Einsatzhülse 1 des Ausführungsbeispiels gemäß Fig. 1. Aus Fig. 2 lässt sich besonders deutlich der bis auf die Umfangslücke 3 ringförmig geschlossene Aufbau der Einsatzhülse 1 sowie deren aufgrund der Flachabschnitte 7, 8, 9 bei diesem Ausführungsbeispiel im Querschnitt dreiecksartige Grundform erkennen. Weiterhin lässt sich der Darstellung gemäß Fig. 2 besonders deutlich entnehmen, dass an den Armfreimachungen 16, 17, 18 an deren der jeweiligen Auflagezunge 4, 5, 6 zugewandten Seite als Rückhaltemittel jeweils eine Rückhaltekante 32, 33, 34 an der kopfseitigen Ringstruktur ausgebildet ist.

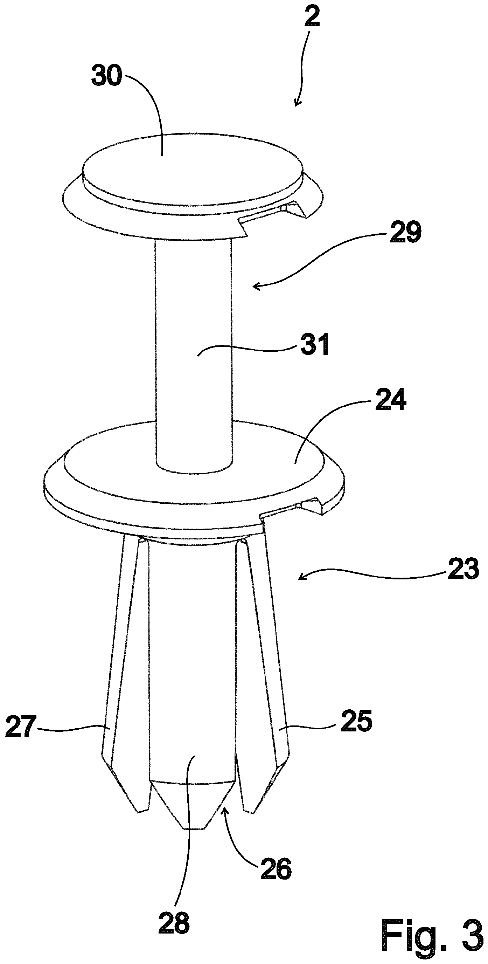

Fig. 3 zeigt in einer perspektivischen Ansicht den Spreizniet 2 des Ausführungsbeispiels gemäß Fig. 1 mit dem Nietstift 29 in einer nur teilweise in den Nietkörper 23 eingeschobenen Stellung. Aus Fig. 3 ist ersichtlich, dass die Spreizarme 25, 26, 27, 28 an ihrem dem Kopfteller 24 abgewandten freien Ende nach radial innen zulaufend angeschrägt sind, um ein einfaches Einschieben in die Einsatzhülse 1 zu gewährleisten.

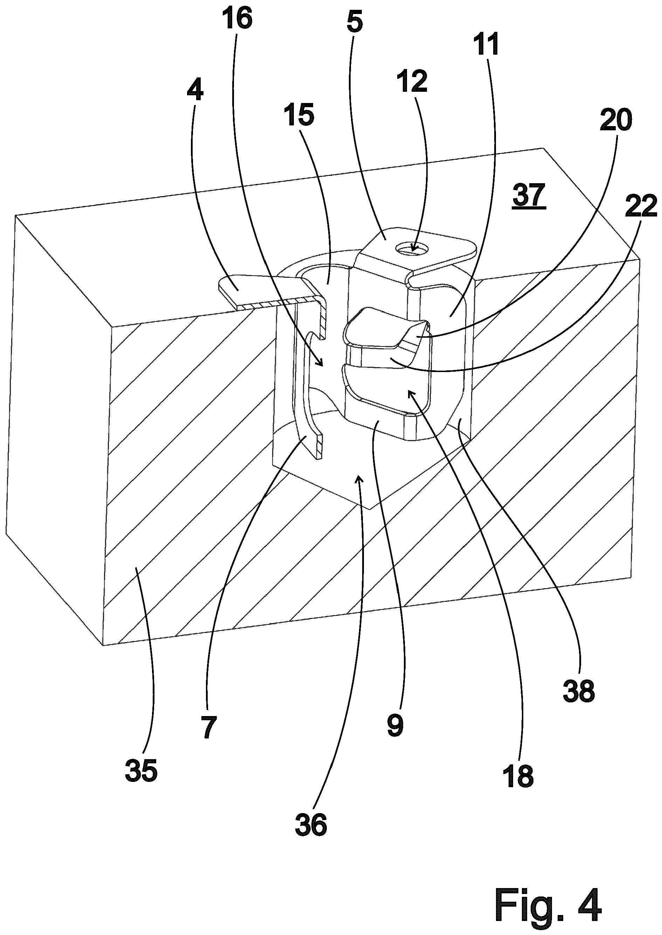

Fig. 4 zeigt in einer geschnittenen perspektivischen Ansicht ein Trägerteil 35, das mit einer Einsatzausnehmung 36 ausgebildet ist. In der Anordnung gemäß Fig. 4 ist die Einsatzhülse 1 gemäß dem Ausführungsbeispiel von Fig. 1 unter Aneinanderdrücken der Ausstellabschnitte 10, 11 eingefügt, so dass die Auflagezungen 4, 5, 6 auf einer Deckseite 37 des Trägerteiles 35 aufliegen und die Krallzungen 19, 20 nach einer durch die gebogenen Verbindungsabschnitte 14, 15 besonders wirksamen Relaxation der Einsatzhülse 1 in einer Innenwand 38 der Einsatzausnehmung 36 zur Verliersicherung verankert sind. Somit ist die Einsatzhülse 1 lösbar fest mit dem Trägerteil 35 verbunden.

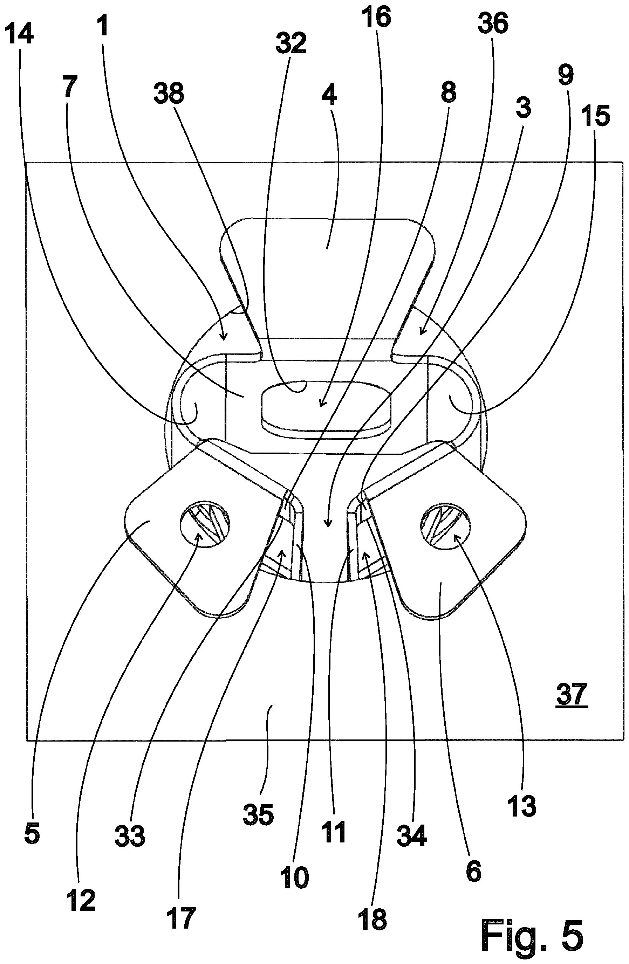

Fig. 5 zeigt in einer Draufsicht die Anordnung gemäß Fig. 4. Aus der Darstellung gemäß Fig. 5 lässt sich erkennen, dass durch linienartige Kontaktbereiche zwischen den Ausstellabschnitten 10, 11 sowie den Verbindungsabschnitten 14, 15 und der Innenwand 38 der Einsatzausnehmung 36 eine gute Anpassbarkeit der Einsatzhülse 1 auch an unregelmäßig ausgebildete Einsatzausnehmungen 36 sichergestellt ist. Die Flachabschnitte 7, 8, 9 sind unter Ausbilden eines Freiraums von der Innenwand 38 beabstandet.

Des weiteren lässt sich anhand Fig. 5 erkennen, dass sich die Einsatzhülse 1 beispielsweise durch Einführen eines zangenartigen Demontagewerkzeugs in die Demontageausnehmungen 12, 13 der randseitigen Auflagezungen 5, 6 und Schließen der Umfangslücke 3 im Querschnitt soweit verringern lässt, dass sie nach Freigeben der Krallzungen 19, 20 wieder aus der Einsatzausnehmung 36 entfernbar ist.

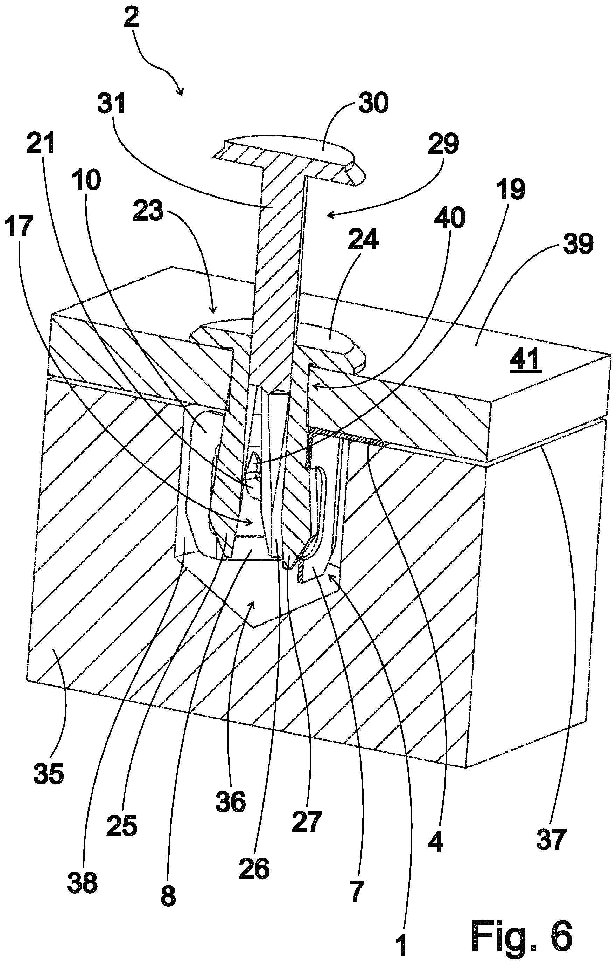

Fig. 6 zeigt in einer geschnittenen perspektivischen Ansicht das Ausführungsbeispiel einer erfindungsgemäßen Verankerungsvorrichtung gemäß Fig. 1 mit der entsprechend der Anordnung gemäß Fig. 4 und Fig. 5 in der Einsatzausnehmung 36 des Trägerteiles 35 angeordneten Einsatzhülse 1, einem auf die Deckseite 37 des Trägerteiles 35 aufgelegten Anbauteil 39 und dem Spreizniet 2 in einer Vormontageanordnung. In der Vormontageanordnung ist der Nietkörper 23 durch eine in dem Anbauteil 39 ausgebildete Durchsteckausnehmung 40 durchgeführt und mit den Spreizarmen 25, 26, 27, 28 in die Einsatzhülse 1 derart eingeschoben, dass drei Spreizarme 25, 26, 27 in jeweils einer Armfreimachung 16, 17, 18 angeordnet sind und der verbleibende Spreizarm 28 in der Umfangslücke 3 zwischen den in Umfangsrichtung voneinander beabstandeten Ausstellabschnitten 10, 11 liegt. Durch den Freiraum zwischen den Flachabschnitten 7, 8, 9 und der Innenwand 38 ist ein zuverlässiger Hintergriff der in den Armfreimachungen 16, 17, 18 liegenden Spreizarme 25, 26, 27 gewährleistet. Der Kopfteller 24 des Nietkörpers 23 liegt dabei auf einer Deckseite 41 des Anbauteiles 39 auf, während die Auflagezungen 4, 5, 6 der Einsatzhülse 1 zwischen dem Trägerteil 35 und dem Anbauteil 39 angeordnet sind.

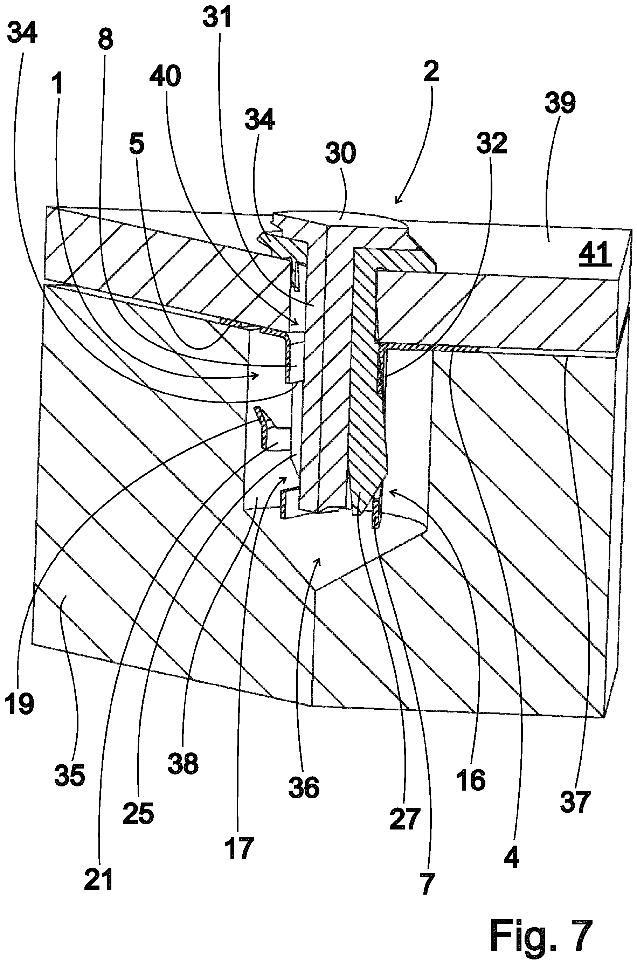

Fig. 7 zeigt in einer perspektivischen geschnittenen Ansicht die Anordnung gemäß Fig. 6 mit dem nunmehr in eine Endmontageanordnung in einer Einschieberichtung in den Nietkörper 23 eingeschobenen Nietstift 29 des Spreizniets 2. Aus Fig. 7 lässt sich deutlich erkennen, dass in der Endmontageanordnung der Deckteller 30 des Nietstiftes 29 auf dem Kopfteller 24 des Nietkörpers 23 aufliegt und der Spreizschaft 31 des Nietstiftes 29 die Spreizarme 25, 26, 27, 28 des Nietkörpers 23 radial nach außen verspannt. Dabei graben sich die Rückhaltekanten 32, 33, 34 in die in den Armfreimachungen 16, 17, 18 angeordneten Spreizarmen 25, 26, 27 und die Krallzungen 19, 20 weiter in die Innenwand 38 ein, so dass der Spreizniet 2 lösbar fest in der Einsatzhülse 1 angeordnet ist. Die Einsatzhülse 1 ist nunmehr ebenfalls sehr stabil über ihre Erstreckung in Längsrichtung verankert.

Nach Bewegen des Nietstiftes 29 entgegen der Einschieberichtung beispielsweise erneut in die Vormontagestellung gemäß Fig. 6 relaxieren die Spreizarme 25, 26, 27, 28 zumindest in einem gewissen Umfang, so dass die Verbindung zwischen den in den Armfreimachungen 16, 17, 18 angeordneten Spreizarmen 25, 26, 27 und den Rückhaltekanten 32, 33, 34 zumindest soweit gelöst ist, dass der Nietkörper 23 mit verhältnismäßig geringen Kräften aus der Einsatzhülse 1 entfernbar und damit das Anbauteil 39 wieder von dem Trägerteil 35 abnehmbar ist. Anschließend lässt sich, wie in Verbindung mit Fig. 5 erläutert, bei Bedarf auch die Einsatzhülse 1 entfernen.

## Patentansprüche

1. Verankerungsvorrichtung mit einer Einsatzhülse (1), die über Krallzungen (19, 20) verfügt, die mit einer Innenwand (38) einer in einem Trägerteil (35) ausgebildeten Einsatzausnehmung (36) in Eingriff bringbar sind und die mit Rückhaltemitteln (32, 33, 34) ausgestattet ist, und mit einem Einfügeteil (2), das in einer Einschieberichtung in die Einsatzhülse (1) einschiebbar und durch die Rückhaltemittel (32, 33, 34) gegen ein Verschieben entgegen der Einschieberichtung blockiert ist, **dadurch gekennzeichnet, dass** das Einfügeteil (2) einen mit wenigstens einem Spreizarm (25, 26, 27, 28) ausgestatteten Nietkörper (23) aufweist und dass die Rückhaltemittel durch wenigstens eine Rückhaltekante (32, 33, 34) gebildet sind, die mit dem oder jedem Spreizarm (25, 26, 27, 28) in Eingriff kommt.

2. Verankerungsvorrichtung nach Anspruch 1, **dadurch gekennzeichnet, dass** das Einfügeteil als Spreizniet (2) ausgebildet ist, der einen zum Spreizen des oder jedes Spreizarmes (25, 26, 27, 28) in den Nietkörper (23) einschiebbaren Nietstift (29) aufweist.

3. Verankerungsvorrichtung nach Anspruch 1 oder Anspruch 2, **dadurch gekennzeichnet, dass** der Nietkörper (23) mit wenigstens zwei Spreizarmen (25, 26, 27, 28) ausgebildet ist.

4. Verankerungsvorrichtung nach Anspruch 2 oder Anspruch 3, **dadurch gekennzeichnet, dass** die Einsatzhülse (1) für wenigstens einen Spreizarm (25, 26, 27) jeweils eine Armfreimachung (16, 17, 18) aufweist, in die bei Einschieben des Nietstifts (29) der zugehörige Spreizarm (25, 26, 27) eintritt.

5. Verankerungsvorrichtung nach Anspruch 4, **dadurch gekennzeichnet, dass** die oder jede Rückhaltekante (32, 33, 34) in jeweils einer in der Einsatzhülse (1) ausgebildeten Armfreimachung (16, 17, 18) ausgebildet ist.

6. Verankerungsvorrichtung nach einem der Ansprüche 1 bis 5, **dadurch gekennzeichnet, dass** an der Einsatzhülse (1) wenigstens eine radial nach außen weisende und sich rechtwinklig zur axialen Richtung erstreckende Auflagezunge (4, 5, 6) angeformt ist.

7. Verankerungsvorrichtung nach Anspruch 6, **dadurch gekennzeichnet, dass** die Krallzungen (19, 20) nach radial außen schräg zu den Auflagezungen (4, 5, 6) ausgerichtet sind.

8. Verankerungsvorrichtung nach einem der Ansprüche 1 bis 7, **dadurch gekennzeichnet, dass** die Einsatzhülse (1) eine Anzahl von Flachabschnitten (7, 8, 9) aufweist, wobei Paare von Flachabschnitten (7, 8, 9) über nach radial außen gewölbte Verbindungsabschnitte (14, 15) miteinander verbunden sind, und dass an zwei Flachabschnitten (8, 9) nach radial außen abgewinkelte Ausstellabschnitte (10, 11) angeformt sind.

9. Verankerungsvorrichtung nach Anspruch 8 soweit auf Anspruch 4 rückbezogen, **dadurch gekennzeichnet, dass** jeder Flachabschnitt (7, 8, 9) eine Armfreimachung (16, 17, 18) aufweist.

10. Verankerungsvorrichtung nach einem der Ansprüche 1 bis 9, **dadurch gekennzeichnet, dass** die Einsatzhülse (1) ein aus einem Metallblech hergestelltes Stanz-Biege-Teil ist.

## Claims

1. Anchoring device with an insertion sleeve (1), having claw tongues (19, 20) that can be engaged with an inner wall (38) of a insertion recess (36) formed on a support part (35), and equipped with retention means (32, 33, 34), and with an insertion part (2) that is blocked against a displacement against the insertion direction in a slide-in direction into the insertion sleeve (1) and by the retention means (32, 33, 34), **characterised in that** the insertion part (2) has a rivet body (23) equipped with at least one expanding arm (25, 26, 27, 28), and **in that** the retention means are formed by at least one retention edge (32, 33, 34) that is engaged with the or each expanding arm(s) (25, 26, 27, 28).

2. Anchoring device according to claim 1, **characterised in that** the insertion part is designed as an expanding rivet (2), having a rivet pin (29) to be pushed into the rivet body (23) for expanding the or each expanding arm (25, 26, 27, 28).

3. Anchoring device according to claim 1 or claim 2, **characterised in that** the rivet body (23) is designed with at least two expanding arms (25, 26, 27, 28).

4. Anchoring device according to claim 2 or claim 3, **characterised in that** the insertion sleeve (1) has an arm release (16, 17, 18) each for at least one expanding arm (25, 26, 27), which the associated expanding arm (25, 26, 27) enters when the rivet pin (29) is pushed in.

5. Anchoring device according to claim 4, **characterised in that** the or each retention edge(s) (32, 33, 34) is formed in an arm release (16, 17, 18) each, formed in the insertion sleeve (1).

6. Anchoring device according to one of the claims 1 to 5, **characterised in that** at least one contact tongue (4, 5, 6) is formed on the insertion sleeve (1) and extends radially outwards at a right angle to the axial direction.

7. Anchoring device according to claim 6, **characterised in that** the claw tongues (19, 20) are aligned radially outwards, diagonal to the contact tongues (4, 5, 6).

8. Anchoring device according to one of the claims 1 to 7, **characterised in that** the insertion sleeve (1) has a number of flat sections (7, 8, 9), wherein pairs of flat sections (7, 8, 9) are connected with each other via radially outwardly arced connection sections (14, 15), and that radially outwardly angled opening sections (10, 11) are formed on two flat sections (8, 9).

9. Anchoring device according to claim 8 and referenced back to claim 4, **characterised in that** each flat section (7, 8, 9) has an arm release (16, 17, 18).

10. Anchoring device according to one of the claims 1 to 9, **characterised in that** the insertion sleeve (1) is punched and bent part produced from sheet metal.

## Revendications

1. Dispositif d'ancrage doté d'une douille d'insert (1) qui dispose de langues d'ancrage (19, 20) qui peuvent être mises en prise avec une paroi intérieure (38) d'un évidement rapporté (36) formé dans un élément de support (35), ladite douille d'insert est équipée de moyens de retenue (32, 33, 34), ledit dispositif d'ancrage doté d'une partie d'insertion (2), qui peut être insérée dans un sens d'insertion dans la douille d'insert (1) et est bloquée par les moyens de retenue (32, 33, 34) contre tout coulissement dans le sens inverse d'insertion, **caractérisé en ce que** la partie d'insertion (2) présente un corps de rivet (23) équipé au moins d'un bras d'écartement (25, 26, 27, 28) et que les moyens de retenue sont formés au moins d'un bord de retenue (32, 33, 34) qui vient en contact avec le ou chaque bras d'écartement (25, 26, 27, 28).

2. Dispositif d'ancrage selon la revendication 1, **caractérisé en ce que** la partie d'insertion est formée comme un rivet d'expansion (2) qui présente une goupille de rivet (29) pouvant être insérée dans le corps de rivet (23) pour écarter le ou chaque bras d'écartement (25, 26, 27, 28).

3. Dispositif d'ancrage selon la revendication 1 ou la revendication 2, **caractérisé en ce que** le corps de rivet (23) est formé au moins de deux bras d'écartement (25, 26, 27, 28).

4. Dispositif d'ancrage selon la revendication 2 ou la revendication 3, **caractérisé en ce que** la douille d'insert (1) présente respectivement un dispositif de libération de bras (16, 17, 18) pour au moins un bras d'écartement (25, 26, 27) dans lequel le bras d'écartement (25, 26, 27) correspondant entre lors de l'insertion de la goupille de rivet (29).

5. Dispositif d'ancrage selon la revendication 4, **caractérisé en ce que** le ou chaque bord de retenue (32, 33, 34) est formé respectivement dans un dispositif de libération de bras (16, 17, 18) formé dans la douille d'insert (1).

6. Dispositif d'ancrage selon l'une des revendications 1 à 5, **caractérisé en ce qu'**au moins une langue de support (4, 5, 6) dirigée radialement vers l'extérieur et s'étendant perpendiculairement par rapport au sens axial est formée sur la douille d'insert (1).

7. Dispositif d'ancrage selon la revendication 6, **caractérisé en ce que** les langues d'ancrage (19, 20) sont dirigées en biais radialement vers l'extérieur par rapport aux langues de support (4, 5, 6).

8. Dispositif d'ancrage selon l'une des revendications 1 à 7, **caractérisé en ce que** la douille d'insert (1) présente un nombre de parties planes (7, 8, 9), les paires de parties planes (7, 8, 9) sont raccordées entre elles par des parties de jonction (14, 15) courbées radialement vers l'extérieur, et que des parties de déplacement (10, 11) courbées radialement vers l'extérieur sont formées sur deux parties planes (8, 9).

9. Dispositif d'ancrage selon la revendication 8, tout en se tenant à la revendication 4, **caractérisé en ce que** chaque partie plane (7, 8, 9) présente un dispositif de libération de bras (16, 17, 18).

10. Dispositif d'ancrage selon l'une des revendications 1 à 9, **caractérisé en ce que** la douille d'insert (1) est une pièce estampée pliée fabriquée en tôle métallique.
